# EUROPEAN PATENT APPLICATION

(11) **EP 1 489 615 A1**
(43) Date of publication of application: **22.12.2004**
(21) Application number: 04014237.4
(22) Date of filing: 17.06.2004
(51) Int. Cl.: G11B 23/50

(54) **Disk cartridge**

(30) Priority: 17.06.2003 JP 2003172287; 21.08.2003 JP 2003297439; 27.08.2003 JP 2003302918; 12.09.2003 JP 2003321424
(71) Applicant: Fuji Photo Film Co., Ltd., Kanagawa-ken (JP)
(72) Inventor: Aoishi, Harumi, c/o Fuji Photo Film Co., Ltd., Odawara-shi, Kanagawa-Ken (JP); Shiga, Hideaki, c/o Fuji Photo Film Co., Ltd., Odawara-shi, Kanagawa-Ken (JP); Noguchi, Hitoshi, c/o Fuji Photo Film Co., Ltd., Odawara-shi, Kanagawa-Ken (JP); Saito, Shinji, c/o Fuji Photo Film Co., Ltd., Odawara-shi, Kanagawa-Ken (JP)
(74) Representative: HOFFMANN - EITLE

(57) **Abstract**

The cleaning effect of an information recording medium by liners is improved in a disk cartridge. The liners are constituted by non-woven fabric, formed by divided fibers, which are obtained by subjecting a compound divided fiber to a fiber division process.

## Description

### BACKGROUND OF THE INVENTION

### Field of the Invention

The present invention relates to a disk cartridge housing a magnetic disk capable of high density recording therein.

### Description of the Related Art

Conventionally, disk cartridges are known. These disk cartridges comprise flexible magnetic disks, which are rotatably housed within cases. The magnetic disks comprise flexible discoid substrates made of polyester sheets or the like, and magnetic layers, which are formed on both sides of the substrate. This type of magnetic disk cartridge has advantages such as ease of handling and low cost. Therefore, they are employed primarily as recording media for computers.

Particularly, accompanying the miniaturization and the increase in data processing function of computers in recent years, there is a great demand for improvements in recording capacity, to achieve increased capacity and miniaturization of disk cartridges. Therefore, it has been proposed to realize high density recording by narrowing track widths and employing MR heads as magnetic heads. However, in the case that MR heads are employed, microscopic thickness distributions of the magnetic disk become a source of noise. In order to reduce the noise caused by the thickness distributions, a so called "Wet on Dry coating" (hereinafter, referred to as W/D coating) method for manufacturing magnetic disks has been proposed (refer to, for example, U.S. Patent Laid-Open No. 2003138668). Further, U.S. Patent Laid-Open No. 2003138668 discloses the addition of diamond particles to the magnetic layer, to secure sufficient durability of a magnetic disk, which is manufactured by the W/D coating method.

Regarding the aforementioned disk cartridge, when dust particles and the like become attached to the magnetic disk therein, the particles become the cause of so called "dropouts". Dropouts become more conspicuous with increased recording density of the magnetic disk. Therefore, disk cartridges are constructed with liners attached on the inner surfaces, which face the magnetic disk, of the case. The liners serve to remove the dust particles, which have become attached to the magnetic disk, to maintain the surfaces thereof in a clean state.

The liners comprise non woven fabric having fibers with an average fiber diameter within a range from 10µm to 30µm, with the surface that contacts the magnetic disk being in a napped state (refer to, for example, Japanese Unexamined Patent Publication No. 2002-50151). The surfaces of the liners contact the rotating magnetic disk to wipe off and capture the dust particles attached thereto.

Recently, magnetic disks are desired to have large recording capacity, high recording density, and narrow tracks. For example, disk cartridges having recording capacities of 1GB or greater and track pitches of 3µm or less have been proposed. In these disk cartridges, microscopic dust particles, which had heretofore not caused problems in conventional floppy disks, cause dropouts when attached to the magnetic disks therein. Particularly, in the case that the magnetic disk is a high capacity magnetic disk having a planar recording density of approximately 158.7Mbit/cm² (1Gbit/inch²) or greater, a linear recording density of 100Kbpi or greater, or a track density of 10Ktpi or greater, the adverse effects caused by extremely small dust particles become conspicuous.

Accordingly, high dust removal properties, capable of removing microscopic dust particles and extremely small amounts of dust, are desired in liners for disk cartridges capable of high density recording. However, the conventional liners, as represented that disclosed in U.S. Patent Laid-Open No. 2003138668, are non-woven fabric comprising fibers having fiber diameters from 10µm to 30µm. Therefore, the microscopic dust particles that cause problems during high density recording cannot be removed thereby. For this reason, several measures to be taken against microscopic dust particles have been proposed. One is to improve the dust entrance prevention properties of the disk cartridge itself. Another is to improve error correcting functions of a disk drive apparatus. However, the aforementioned measures are expensive to implement. Additionally, they are not fundamental solutions to the objective, which is to avoid the drawbacks caused by microscopic dust particles.

### SUMMARY OF THE INVENTION

The present invention has been developed in view of the shortcomings described above. It is an object of the present invention to provide a disk cartridge that sufficiently removes dust particles and the like, which are attached to an information recording medium capable of high density recording.

The disk cartridge of the present invention comprises:
a flat case;
a discoid information recording medium, which is rotatably housed by the case; and
liners, which are attached to surfaces of the case that face the information recording medium, for removing contaminants from the information recording medium; wherein:
   the liners comprise non-woven fabric that includes extremely fine fibers having fiber diameters within a range from 0.05µm to 10µm.

Here, the fiber structure of the non-woven cloth is not limited to any particular structure, as long as it includes extremely fine fibers having fiber diameters within a range from 0.05µm to 10µm. The non-woven fabric may be formed to include the extremely fine fibers by removing "sea" fiber components from fibers having a so-called "sea-island" structure. Alternatively, the non-woven fabric may comprise by extremely fine fibers, which have been formed by a direct spinning method. As a further alternative, the non-woven fabric may comprise compound divided fibers, which are obtained by adhesively attaching a plurality of fiber components to each other at their side surfaces, and are subjected to a fiber division process.

Note that compound fibers refer to a plurality of co-extending fiber components of two or more types, which are adhesively attached to each other at their side surfaces. Further, "compound divided fibers" refer to compound fibers, in which each of the fiber components that constitute the compound fibers are capable of being divided.

The "fiber division process" refers to dividing the compound divided fibers into the fiber components that constitute it. This may be accomplished by: exposing the compound divided fibers to a high pressure water stream; applying heat to the compound divided fibers; soaking the compound divided fibers in a solution, or the like. The aforementioned methods are applied according to the adhesive structure among the fiber components. Each of the divided fiber components are referred to as a divided fiber.

Further, the structure of the compound divided fiber is not limited, as long as the structure is divisible by a fiber division process. Possible structures include: a parallel two layer structure, a parallel multiple layer structure, a multiple core structure, and a radial structure. As a further alternative, a structure may be adopted wherein a plurality of fiber components, having fiber diameters within a range from 1µm to 10µm, are provided along the cross sectional outer periphery of a fiber component having a fiber diameter within a range from 6µm to 20µm.

The non-woven fabric may be made of any material. However, it is preferable that the non-woven fabric include fiber components made of polyester. As an example, the compound divided fiber that constitutes the non-woven fabric may comprise polyolefin fiber components having an average diameter within a range of 6µm to 20µm, and polyester fiber components having an average diameter within a range of 1µm to 10µm.

Note that it is preferable for the non-woven fabric to be produced by the spunbond method.

Further, a solidifying process may be administered on the edges of the liners.

The information recording medium may be a flexible magnetic disk having a surface recording density of approximately 158.7Mbit/cm²; and
artificial diamonds having average particle diameters within a range from 30nm to 250nm are included in a magnetic layer of the magnetic disk within a range from 0.5% to 10% by weight with respect to the magnetic material therein.

Note that the information recording medium may be of any composition as long as artificial diamonds having average particle diameters in the range from 30nm to 250nm are included in the magnetic layer of the magnetic disk in the range from 0.5% to 10% by weight with respect to the magnetic material therein. For example, the information recording medium may comprise a substrate; a substantially nonmagnetic base layer, provided on the substrate; and a magnetic layer formed by hexagonal ferrite powder dispersed within a binder, stacked on the base layer.

Further, the information recording medium may be a magnetic disk comprising:
a substrate;
a substantially nonmagnetic base layer, provided on the substrate; and
a magnetic layer formed by ferromagnetic powder dispersed within a binder, stacked on the base layer; wherein:
   the information recording medium has a surface recording density of approximately 158.7Mbit/cm²; and
   protrusions having heights of 10nm or greater are provided on the magnetic layer, at a density of 10 to 1000 protrusions per 900µm².

Here, the number of protrusions having heights of 10nm or greater, at a density of 10 to 1000 protrusions per 900µm², is that which is measured by an atomic force microscope (AFM).

According to the disk cartridge of the present invention, the liners comprise non-woven fabric that includes extremely fine fibers having fiber diameters within a range from 0.05µm to 10µm. Therefore, it becomes possible to employ non-woven fabric that includes fiber components (for example, having fiber diameters within a range from 1µm to 10µm), which are sufficiently finer than fiber components having fiber diameters within a range from 10µm to 30µm, of conventional non-woven fabrics, as the liners. Therefore, microscopic dust particles which have become attached to the information recording medium are enabled to be removed by the liners. Reduction of recording/reproduction errors and suppression of dropouts are realized in disk cartridges having large recording capacity, high recording density, and narrow tracks. Thereby, a durable and reliable disk cartridge is provided.

Note that the non-woven fabric may be produced by the spunbond method. In this case, the fiber lengths of the divided fibers that constitute the non-woven fabric can be increased. Therefore, the amount of dust generated by the liners themselves is reduced, thereby further reducing the generation of recording/reproduction errors of the disk cartridge.

The non-woven fabric may include fiber components made of polyester. In this case, the liners are formed by a comparatively hard material. Therefore, wearing of the liners by the information recording medium is suppressed, further reducing the generation of dust particles.

A solidifying process may be administered on the edges of the liners. In this case, the generation of dust at the edges of the liners, which are the cut ends of the fiber components, is reduced. Thereby, the amount of dust generated by the liners themselves is further reduced.

Further, the information recording medium may be a magnetic disk that includes artificial diamonds having average particle diameters within a range from 30nm to 250nm in a magnetic layer of the magnetic disk within a range from 0.5% to 10% by weight with respect to the magnetic material therein. In this case, wearing of the magnetic layer by the liners as well as wearing of the liners by the diamond particles is reduced. Thereby, the durability and the reliability of the magnetic disk are improved, and the occurrence of dropouts, caused by dust particles generated from the liners or the magnetic disk, is suppressed.

The information recording medium may be a magnetic disk comprising:
a substrate;
a substantially nonmagnetic base layer, provided on the substrate; and
a magnetic layer formed by ferromagnetic powder dispersed within a binder, stacked on the base layer; wherein:
   the information recording medium has a surface recording density of approximately 158.7Mbit/cm²; and
   protrusions having heights of 10nm or greater are provided on the magnetic layer, at a density of 10 to 1000 protrusions per 900µm². In this case, microscopic dust particles are enabled to be removed by the liners. At the same time, increase in rotational torque is suppressed, even if the liners according to the present invention are utilized. Thereby, the running durability and the S/N ratio are prevented from deteriorating.

### BRIEF DESCRIPTION OF THE DRAWINGS

Figure 1 is an exploded perspective view of a preferred embodiment of the disk cartridge according to the present invention.
Figure 2 is a schematic view illustrating an example of a compound divided fiber, which is utilized in liners of the disk cartridge according to the present invention.
Figure 3 is a schematic view illustrating an example of a fiber producing apparatus, for producing a compound divided fiber, which is utilized in liners of the disk cartridge according to the present invention.
Figure 4A is a schematic view illustrating a compound divided fiber, which is utilized in liners of the disk cartridge according to the present invention, prior to a fiber division process.
Figure 4B is a schematic view illustrating a compound divided fiber, which is utilized in liners of the disk cartridge according to the present invention, following the fiber division process.
Figure 5A is a schematic diagram illustrating a compound divided fiber of a parallel two layer construction, which is utilized in liners of the disk cartridge according to the present invention.
Figure 5B is a schematic diagram illustrating a compound divided fiber of a parallel multiple layer structure, which is utilized in liners of the disk cartridge according to the present invention.
Figure 5C is a schematic diagram illustrating a compound divided fiber of a multiple layer radial structure, which is utilized in liners of the disk cartridge according to the present invention.
Figure 6 is a schematic diagram illustrating an example of a fiber having a sea-island structure, which is utilized in liners of the disk cartridge according to the present invention.
Figure 7 is a schematic diagram of a direct fiber spinning apparatus, for producing extremely fine fibers, which are utilized in liners of the disk cartridge according to the present invention.

### BEST MODE FOR CARRYING OUT THE INVENTION

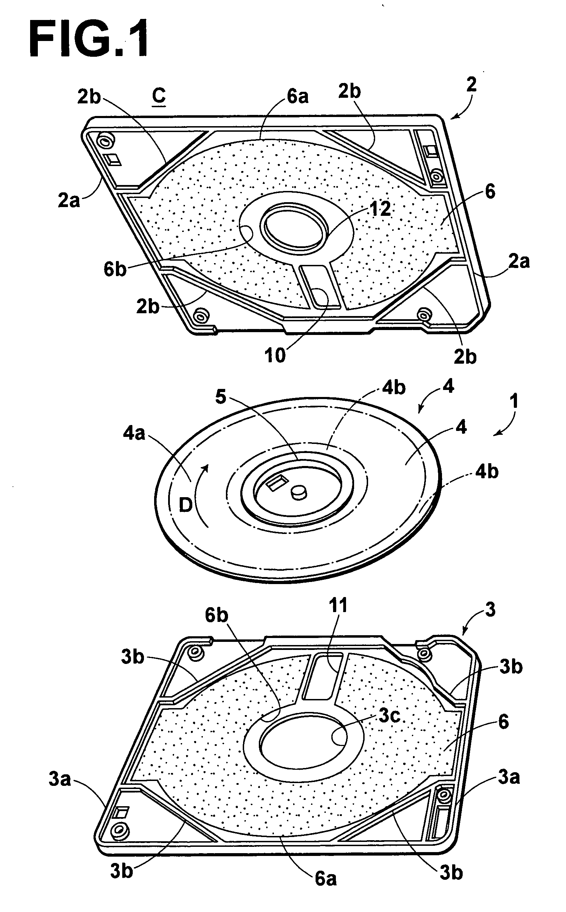

Hereinafter, embodiments of the disk cartridge according to the present invention will be described in detail with reference to the attached drawings. Figure 1 is an exploded perspective view of a disk cartridge 1 of the present invention. The disk cartridge 1 is, for example, a so-called 3.5 inch floppy disk cartridge, and comprises: a flat case C; a discoid magnetic disk 4; and dust removing liners 6, 6. The case C is formed by attaching an upper shell 2 and a lower shell 3 to each other. The magnetic disk 4 is rotatably housed within the case C. The liners 6, 6 are provided on the interior surfaces, of the case C, which face the magnetic disk 4 housed therein.

The upper shell 2 and the lower shell 3 are formed to be flat and substantially rectangular. The material of the upper shell 2 and the lower shell 3 is, for example, a synthetic resin such as an acrylonitryl-butadiene-styrene copolymer. Outer peripheral ribs 2a and 3a, which constitute side walls, are formed at the outer peripheries of the upper shell 2 and the lower shell 3, respectively. Inclined inner ribs 2b and 3b are formed at the corners of the upper shell 2 and the lower shell 3. In addition, substantially rectangular magnetic head insertion windows 10 and 11, for enabling access to the magnetic disk 4, are provided in the upper shell 2 and the lower shell 3, respectively.

A circular spindle aperture 3c, of the same size as a center core 5, is formed at the central portion of the lower shell 3. An annular protrusion 12, which is positioned toward the interior of an annular portion at the outer periphery of the center core 5, is provided at the central portion of the inner surface of the upper shell 2. The annular protrusion 12 is designed to engage with the interior of the annular portion of the center core 5, thereby restricting movement of the magnetic disk 4 in its radial direction.

The magnetic disk 4 is, for example, a discoid magnetic disk, which is held at its central portion by the center core 5. When the disk cartridge 1 is loaded into a drive device (not shown) , the center core 5 engages with a rotating spindle of the drive device, to rotatably hold the magnetic disk 4.

Here, the magnetic disk 4 is a high capacity magnetic information recording medium, which has a linear recording density of 100Kbpi or greater, a track density of 10Ktpi or greater, or a planar recording density of approximately 158.7Mbit/cm² (1Gbit/inch²) or greater. Preferably, the magnetic disk 4 has a planar recording density of 5Gbit/inch² or greater. Data is reproduced by an MR head of a disk drive. The magnetic disk 4 comprises: a substrate; a substantially nonmagnetic base layer, which is provided on the substrate; and a magnetic layer formed by dispersing hexagonal ferrite powder within a binder, which is stacked on the base layer. Artificial diamonds are also dispersed within the magnetic layer. Hereinafter, each component of the magnetic disk 4 will be described.

### [Substrate]

First, a description will be given of the substrate, which is employed in the magnetic disk 4. The substrate is preferably a flexible nonmagnetic substrate. Known polyester films such as polyethylene terephthalate and polyethylene naphthalate, known polyolefin films, or any other known film, such as cellulose triacetate, polycarbonate, polyamide, polyimide, polyamide-imide, polysulfone, polyaramid, aromatic polyamide, and polybenzoxazole may be utilized as the material of the substrate. Among these, it is preferred that high strength materials such as polyethylene naphthalate and polyamide are employed. Alternatively, a stacked type substrate, such as that disclosed in Japanese Unexamined Patent Publication No. 3(1991)-224127, may be employed as necessary in order to obtain a different surface roughness for a magnetic surface and a base surface. The substrate may be subjected to various processes, such as a corona discharge process, a plasma process, an adhesion facilitating process, a heat process, and a dust removal process, in advance. It is also possible to employ aluminum or glass substrate as well.

Specifically, it is preferable to employ a substrate having an average center plane surface roughness Sra of 8.0nm or less, as measured by an optical profiler such as TOPO-3D manufactured by WYKO Corp.. It is further preferable to employ a substrate having an average center plane surface roughness Sra of 4.0nm or less, and still further preferable to employ a substrate having an average center plane surface roughness Sra of 2.0nm or less. It is preferable that the substrate not only has a small average center plane surface roughness, but is also devoid of any large protrusions, that is, protrusions 0.5µm or higher. The surface roughness is freely controllable as necessary, by the size and the amount of fillers which are added to the substrates. Oxides and carbonates, such as Ca, Si, and Ti are examples of fillers. In addition, organic fine powders, such as acrylics, may be employed as the fillers. It is preferable that the maximum height Rmax of the substrate is 1µm or less, the ten point average roughness SRz is 0.5µm or less, the central plane height SRp is 0.5µm or less, the central plane depth is 0.5µm or less, the central plane area ratio SSr is 10% or greater and 90% or less, the average wavelength Sλa is 5µm or greater and 300µm or less. The surface protrusion distribution is controllable as desired by adding the fillers, to obtain desired electromagnetic conversion properties and durability. The fillers, sized 0.01µm to 1µm, may be added at a density of 0 to 2000 per 0.1mm².

Further, it is preferable that the F-5 value of the substrate is within a range of 5 to 50kg/mm² (49 to 490MPa). It is preferable that the thermal shrinkage rate of the substrate, when in an environment at 100°C for 30 minutes, is 3% or less. It is further preferable that the thermal shrinkage rate of the substrate under the above conditions is 1.5% or less. It is preferable that the thermal shrinkage rate of the substrate, when in an environment at 80°C for 30 minutes is 0.5% or less. It is further preferable that the thermal shrinkage rate of the substrate under the above conditions is 0.1% or less. It is preferable that the tearing resistance of the substrate is 5 to 100Kg/mm², and that the elasticity of the substrate is 100 to 2000Kg/mm² (0.98 to 19.6GPa). It is preferable that the coefficient of thermal expansion of the substrate is 10⁻⁴ to 10⁻⁶/°C, and more preferably 10⁻⁵ to 10⁻⁶/°C. It is preferable that the coefficient of thermal expansion is 10⁻⁴/RH% or less, and more preferably 10⁻⁵/RH% or less. It is preferable for these thermal properties, dimensional properties, and mechanical strength properties to be substantially equal, that is, to deviate only within 10%, in each planar direction of the substrate.

### [Base Layer]

Next, the base layer, which is provided on the above substrate, will be described. An inorganic powder, which is employed for the base layer, is a nonmagnetic powder, and may be selected from inorganic compounds. The inorganic compounds include, for example, metal oxides, metal carbonates, metal sulfates, metal nitrides, metal carbides, and metal sulfides. Titanium dioxide, zinc oxide, iron oxide, and barium sulfate are particularly preferable, due to their small particle size distribution, and the great number of function attaching means thereof. α-iron oxide and titanium dioxide are further preferable. It is preferable that the particle sizes f the nonmagnetic powders is within a range from 0.05 to 2µm. However, similar effects may be obtained, by employing combinations of nonmagnetic powders having different particle sizes, or by spreading the particle diameter distribution of a single nonmagnetic powder. 0.01 to 0.2µm is a particularly favorable range of particle size. In the case that the nonmagnetic powder is a particulate metal oxide, an average particle diameter of 0.08µm or less is preferable. In the case that the nonmagnetic powder is a metal oxide having a needle-like structure, a longitudinal axis length of 0.3µm or less is preferable, and 0.2µm or less is further preferable. The tap density is in a range from 0.05 to 2g/ml, and preferably in a range from 0.2 to 1.5g/ml. The water content of the nonmagnetic powder is 0.1 to 5% by weight, preferably 0.2 to 3% by weight, and further preferably 0.3 to 1.5% by weight. The pH of the nonmagnetic powder is in a range from 2 to 11. However, the preferred range of the pH is from 5.5 to 10. The S_{BET} of the nonmagnetic powder is 1 to 100m²/g, preferably 5 to 80m²/g, and further preferably 10 to 70m²/g. The crystal size of the nonmagnetic powder is preferably in a range from 0.004µm to 1µm, and further preferably in a range from 0.04µm to 0.1µm. Oil absorption, measured using DBP (Di Butyl Phthalate oil) is 5 to 100ml/100g, preferably 10 to 80ml/100g, and further preferably 20 to 60ml/100g. The specific gravity is in a range from 1 to 12, and preferably in a range from 3 to 6. The shape may be needle-like, spheroid, polygonal, or planar. The preferred Moh's hardness is 4 or greater and 10 or less.

The stearic acid adsorption of the nonmagnetic powder is 1 to 20µmol/m², preferably 2 to 15µmol/m², and further preferably 3 to 8µmol/m². It is preferable that Al₂O₃, SiO₂ TiO₂, ZrO₂, SnO₂, Sb₂O₃, ZnO, or Y₂O₃ are present on the surfaces of the nonmagnetic inorganic particles by a surfacing process. Al₂O₃, SiO₂, TiO₂, and ZrO₂ are particularly preferable for their dispersion properties. Among these, Al₂O₃, SiO₂, and ZrO₂, are further preferred. These compounds may be employed either singly or in combination. A coprecipitated surfacing process layer may be employed, as necessary. Alternatively, a method may be applied wherein alumina is deposited on the surface first, then silica is deposited on the alumina surface. As a further alternative, a method may be applied wherein the above process is performed with the order of the alumina and the silica reversed. The surfacing process layer may be porous, as necessary. However, it is generally preferred that the surfacing process layer be uniform and dense.

By mixing carbon black in the base layer, known effects, such as a decrease in the surface electrical resistance Rs and a decrease in light transmittance may be obtained. At the same time, a desired Vickers micro hardness may also be obtained. It is also possible that the inclusion of carbon black in the base layer will have the effect to store lubricants therein. The types of carbon black that may be employed include furnace black for rubber, thermal black for rubber, black for color, acetylene black, etc. The carbon black, which may be included in the base layer, should optimize the properties listed below. Therefore, their use may enable obtainment of the desired effects.

The S_{BET} of the carbon black in the base layer is 100 to 500m²/g, and preferably 150 to 400m²/g. The DBP oil absorption is 20 to 400ml/100g, and preferably 30 to 400ml/100g. The particle diameter of the carbon black is 5 to 80nm, preferably 10 to 50nm, and further preferably 10 to 40nm. It is preferable that the pH of the carbon black is 2 to 10, that the water content is 0.1 to 10%, and that the tap density is 0.1 to 1g/ml.

The carbon black may be utilized so that the amount thereof does not exceed 50% by weight of the aforementioned inorganic compounds, and so that the amount thereof does not exceed 40% of the total weight of the base layer (nonmagnetic layer). The carbon black may be used either singly or in combination. Note that regarding the carbon black to be utilized, reference may be made to, for example, "Carbon Black Manual", edited by the Carbon Black Association.

Organic powders may be added to the base layer, as necessary. Examples of the organic additive powders are: acrylic styrene resin powders, benzo guanamine resin powders, melamine resin powders, phthalocyanine pigments, polyolefin resin powders, polyester resin powders, polyamide resin powders, polyimide resin powders, and poly ethylene fluoride resins.

The binder resins, the lubricants, the dispersion agents, the additives, the solvents, and dispersing methods, which are described below for the magnetic layer, may be applied to the base layer as well. Particularly, known techniques regarding the amounts and types of binder resin, additive, and dispersion agent related to magnetic layers may be applied to the base layer.

### [Magnetic Layer]

Next, the magnetic layer, which is stacked on the base layer, will be described. The magnetic layer is formed by coating the base layer with a magnetic coating, which is hexagonal ferrite powder dispersed within a binder, then drying the coating. Examples of the hexagonal ferrite are: barium ferrite, strontium ferrite, lead ferrite, calcium ferrite, and replacements thereof, such as Co replacements. Specific examples are: barium ferrite and strontium ferrite of the magnetoplanbite type; a ferrite of the magnetoplanbite type, of which the surfaces of the particles are covered with spinel; and barium ferrite and strontium ferrite of the magnetoplanbite type, having a spinel layer on portions thereof. Atomic elements such as A1, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Sr, B, Ge, and Nb may be included, in addition to predetermined atomic elements. Hexagonal ferrite powder, to which elements such as Co-Zn, Co-Ti, Co-Ti-Zr, Co-Ti-Zn, Ni-Ti-Zn, Nb-Zn-Co, Sb-Zn-Co, and Nb-Zn are added, may be utilized. Specific impurities may be included, depending on the materials and the manufacturing methods employed.

It is preferable that the average plate diameter of the hexagonal ferrite powder is 12nm or greater and 50nm or less, and that the average plate thickness of the hexagonal ferrite powder is 5nm or greater and 15nm or less. It is preferable that the magnetic resistance of the hexagonal ferrite powder is 18000e (144kA/m) or greater and 50000e (400kA/m) or less, and further preferably, 20000e (160kA/m) or greater and 35000e (280kA/m) or less.

In the case that the average plate diameter is less than 10nm, or the average plate thickness is less than 5nm, it becomes difficult to maintain magnetic anisotropy. Thereby, the magnetic resistance and thermal stability will be reduced, which is not favorable.

In the case that the magnetic resistance is less than 18000e (144kA/m), the magnetic layer becomes susceptible to recording degaussing, which decreases output. In the case that the magnetic resistance exceeds 50000e (400kA/m), recording on the magnetic layer using a head becomes difficult, which decreases output. It is preferable that the plate ratio (plate diameter/plate thickness) is in a range from 2 to 5. In the case that the plate ratio is low, the filling rate of the hexagonal ferrite within the magnetic layer becomes high, which is favorable. However, sufficient directionality cannot be obtained. In the case that the plate ratio is high, noise is increased, due to the stacking that occurs among the particles. The specific surface area S_{BET} within the particle size range, as measured by the BET method, is 20 to 200m²/g. It is preferable that the distributions of the particle plate diameter and the particle plate thickness is narrow.

The above properties may be compared by randomly measuring 500 particles with particle TEM photography. It is often the case that the distribution is not a normal distribution. However, if a standard deviation with respect to the average size is calculated and expressed, δ/average size=0.1∼2.0. Uniformization of the particle production reaction system, while administering a distribution improvement process on the produced particles, is performed in order to sharpen the particle size distribution. For example, there are known methods, such as selectively dissolving super fine particles within an acid solution.

Hc can be controlled by particle size (plate diameter and plate thickness), the types and amounts of included elements, replacement sites of the elements, the particle production reaction system conditions, and the like. The saturation magnetization δs is 40 to 80A·m²/kg. Although a high δs value is favorable, there is a tendency that the δs value decreases with a decrease in particle size. Combining magnetoplanbite ferrite with spinel ferrite, selecting the types and amounts of included elements, and the like to improve the δs value are well known. It is also possible to employ hexagonal ferrite of the W type. The processing of the surfaces of the magnetic material with a substance that matches a dispersion medium or a polymer, during dispersion of the magnetic material, is also performed. Inorganic compounds and organic compounds are utilized as the surface processing material. Commonly used compounds are oxides or hydroxides of Si, Al, P, and the like; various silane coupling agents; and various titanium coupling agents. The amount of the compounds is 0.1 to 10% with respect to the magnetic material. If the surface process is administered, the adsorption of lubricants, such as fatty acids, becomes 100mg/m² or less, which is preferable. The pH of the magnetic material is also an important factor in dispersion. Generally, optimal values are in a range from 4 and 12, depending on the dispersion medium or the polymer. However, a pH range from 6 to 11 is selected, from the viewpoint of chemical stability and durability of the medium. The water contained within the magnetic material also affects dispersion. Although optimal values vary according to the dispersion medium or the polymer, generally, water content of 0.01 to 2.0% is selected. As examples of methods for producing the hexagonal ferrite, there are: (1) a glass crystallization method, wherein: metal oxides, which are to replace barium oxide, iron oxide, and iron, are mixed with boron oxide or the like, which is a glass forming material, to from a desired ferrite composition; subjecting the mixture to rapid cooling to obtain a non-crystalline structure; reheating the mixture; then cleansing and crushing the mixture to obtain crystalline barium ferrite powder, (2) a hydrothermal reaction method, wherein: a barium ferrite composition metallic salt solution is neutralized with alkali; byproducts are removed; liquid phase heating is performed at 100°C or greater; then cleansing, drying, and crushing the barium ferrite composition, to obtain crystalline barium ferrite powder, and (3) a coprecipitation method, wherein: a barium ferrite composition metallic salt solution is neutralized with alkali; byproducts are removed; the barium ferrite composition is dried; heating is performed at 1100°C or less; then and crushing the barium ferrite composition, to obtain crystalline barium ferrite powder.

There are cases in which the hexagonal ferrite powder includes inorganic ions, such as soluble Na, Ca, Fe, and Ni. Although it is favorable that these ions are not present, no particular influence on the properties of the hexagonal ferrite powder occurs as long as they are included at 200ppm or less.

### [Artificial Diamonds]

Next, the artificial diamonds, which are dispersed within the magnetic layer of the magnetic disk 4, will be described. Artificial diamonds having average particle diameters of 30nm to 250nm, preferably 50nm to 200nm, and further preferably 80nm to 190nm are employed. The artificial diamonds are added at 0.5% to 10% by weight, with respect to the magnetic material (hexagonal ferrite), preferably at 1% to 7% by weight, and further preferably at 2% to 5% by weight.

Carbon black is added to the magnetic layer of the magnetic disk 4, in addition to the artificial diamonds. The carbon black serves to prevent charging of the magnetic layer, to reduce the coefficient of friction, to impart light impermeability, to improve the film strength, and the like. The effects of the carbon black differ according to the type employed. Accordingly, in the case that a multiple layer structure is employed, the type, amount, and combinations of the carbon black may be adjusted for each layer. The adjustment of the carbon black may be performed to optimize the aforementioned properties, such as particle diameter, oil absorption, conductivity, and pH. In fact, the carbon black should be adjusted to optimize the properties for each layer. Specifically, furnace black for rubber, thermal black for rubber, black for color, acetylene black, etc. may be employed as the carbon black. It is preferable that the specific surface area is 5 to 500m²/g, that the DBP oil absorption is 10 to 400ml/100g, that the average particle diameter is 5nm to 300nm, that the water content is 0.1 to 10%, and that the tap density is 0.1 to 1g/cc. A specific example is that which is disclosed in WO98/35345.

Other abradants may be added to the magnetic layer, in addition to the artificial diamonds. Abradants having a Moh's hardness of 6 or greater and an α conversion rate of 90% or greater are α-alumina, β-alumina, silicon carbonate, chromium oxide, cerium oxide, α-iron oxide, corundum, silicon nitride, titanium carbide, titanium oxide, silicon dioxide, boron nitride, etc. The abradants may be utilized singly or in combination. In addition, abradant compounds (an abradant which has been surface processed by a different abradant) may be utilized. There are cases in which the abradants include compounds or elements other than the main components thereof. However, as long as the main component constitutes 90% or greater of the abradant, there is no change in its effect. It is preferable that the average particle diameter of the abradant is 0.01 to 2µm. It is particularly preferable that the particle size distribution is narrow, in order to improve the electromagnetic conversion properties thereof. In order to improve the durability, it is possible to employ combinations of abradants having different particle sizes, or to spread the particle diameter distribution of a single abradant. It is preferable that the tap density of the abradant is 0.3 to 2g/ml, that the water content is 0.1 to 5%, that the pH is 2 to 11, and that the specific surface area is 1 to 30m²/g. The shape of the abradant may be needle-like, spheroid, or cuboid. However, a shape having a corner at a portion thereof has high abrasive properties, which is preferred. A specific example of the abradant is that which is disclosed in WO98/35345. The particle diameter and the amount of the abradant, to be added to the magnetic layer and the base layer (nonmagnetic layer) should be optimized.

### [Additives]

Additives are included in the aforementioned base layer and the magnetic layer. Additives having a lubricating effect, a charge preventing effect, a dispersing effect, a plasticizing effect, etc. are utilized. Examples include: molybdenum disulfate; tungsten disulfate; graphite; boron nitride; graphite fluoride; silicone oil; silicone having a polar group; denatured fatty acid silicone; fluorinated silicone; fluorinated alcohol; fluorinated ester; polyolefin; polyglycol; alkyl phosphate and alkaline metallic salts thereof; alkyl sulfate ester and alkaline metallic salts thereof; polyphenyl ether; phenyl phosphonate; α-naphthyl phosphate; phenyl phosphate; diphenyl phosphate; p-ethyl benzene phosphonate; phenyl phosphinate; amino quinine groups; various silane coupling agents; titanium coupling agents; fluorinated alkyl sulfate ester and alkaline metallic salts thereof; monobasic fatty acid having a carbon number from 10 to 24 (either including unsaturated bonds or divided) and metallic salts thereof (such as Li, Na, K, and Cu); monovalent, divalent, trivalent, quadrivalent, pentavalent, and sexivalent alcohols having a carbon number from 12 to 22 (either including unsaturated bonds or divided); alkoxy alcohol having a carbon number from 12 to 22; mono fatty acid ester or di fatty acid ester or tri fatty acid ester comprising a monobasic fatty acid having a carbon number from 10 to 24 (either including unsaturated bonds or divided) and monovalent, divalent, trivalent, quadrivalent, pentavalent, and sexivalent alcohols having a carbon number from 2 to 12 (either including unsaturated bonds or divided); fatty acid ester of a mono alkyl ether of an alkylene oxide polymer; fatty acid amide having a carbon number from 8 to 22; and aliphatic amine having a carbon number from 8 to 22.

The lubricants and charge preventing agents need not necessarily by 100% pure. Impurities, such as isomers, non-reactants, side reactants, and oxides may be included. It is preferable that these impurities are included at 30% or less, and more preferably at 10% or less.

The aforementioned lubricants and surfactants each have different physical actions. The types, amounts, and ratios of combinations of lubricants used to generate synergistic effects should be optimized, according to objectives. Examples of such combined use include, but are not limited to: employing fatty acids having different melting points in the base layer (nonmagnetic layer) and the magnetic layer, to control seepage to the surface; employing ester groups having different boiling points, melting points, and polarities, to control seepage to the surface; adjusting the amount of surfactant to stabilize the coating; increasing the amount of lubricant added to an intermediate layer, to increase a lubricating effect. Commonly, the total amount of lubricant is selected within the range of 0.1% to 50%, and preferably 2% to 25%, with respect to the magnetic material or the nonmagnetic powder.

Either all of the additives or a portion thereof may be added at any step during the production of the magnetic and nonmagnetic coatings. For example, there are cases in which: the additives are mixed with the magnetic material prior to a kneading step; the additives are added during a dispersing step; the additives are added following dispersion; and the additives are added immediately prior to a coating step. In addition, there are cases in which objectives are achieved by coating a portion or the entirety of the additives following coating of the magnetic layer, either simultaneously or sequentially. Further, it is also possible to coat the surface of the magnetic layer with lubricants following a calendering step or a slitting step.

### [Binder]

As the magnetic layer, the nonmagnetic layer, the lubricants, the dispersion agents, the additives, the solvents, and the dispersion method of the present invention, those of known magnetic layers, and nonmagnetic layers may be applied. Particularly, known techniques related to magnetic layers may be applied to the amount and type of binder, the amounts and types of additive and dispersion agent. In addition, known thermoplastic resins, thermoset resins, reactive resins, and combinations thereof are utilized as the binder. As a thermoplastic resin, those having glass transition temperatures from -100 to 150°C, average molecular weights of 1,000 to 200,000, preferably 10,000 to 100,000, and degrees of polymerization from 50 to 1000.

As examples of thermoplastic resins, there are: polymers and copolymers that have vinyl chloride, vinyl acetate, vinyl alcohol, maleic acid, acrylic acid, acrylic ester, vinylidene chloride, acrylic nitrile, methacrylic acid, methacrylic ester, styrene, butadiene, ethylene, vinyl butyral, vinyl acetal, or vinyl ether as structural units thereof; polyurethane resins; and various rubber resins. As examples of thermoset resins and reactive resins, there are: phenol resin; epoxy resin; polyurethane setting resin; urea resin; melamine resine; alkyd resin; acrylic system reactive resin; formaldehyde resin; silicone resin; epoxy polyamide resin; mixtures of polyesther resin and isocyanate prepolymer; mixtures of polyester polyol and polyisocyanate; and mixtures of polyurethane and polyisoxyanate. These resins are described in detail in "Plastics Handbook", published by Asakura Shoten. In the case that electron beam setting resins are utilized for each layer, the coating film strength is increased, to improve the durability thereof. In addition, the surfaces of the layers become flattened, and the electromagnetic conversion properties are also improved. The above resins may be utilized singly or in combination. A combination of polyurethane resin and at least one of the following: vinyl chloride resin, vinyl chloride vinyl acetate copolymers, vinyl chloride vinyl acetate vinyl alcohol copolymers, and vinyl chloride vinyl acetate vinyl maleic anhydride copolymer is preferable. Alternatively, poly isocyanate may be combined with at least one of the resins listed above, instead of the polyurethane resin.

Known structures may be utilized for the polyurethane resin, such as: polyester polyurethane; polyether polyurethane; polyether polyester polyurethane; polycarbonate polyurethane; polyester polycarbonate polyurethane; and polycaprolactom polyurethane. It is preferable that one or more polar groups, selected from among -COOM, -SO₃M, -OSO₃M, -P=O (OM)₂, -O-P=O (OM)₂ (wherein M is a hydrogen atom or an alkaline metallic salt group), -NR₂, -N+R₃ (wherein R is a carbon hydride group), an epoxy group, -SH, and -CN, are copolymerized with or introduced, by an additional reaction, to each of the binders listed above. The amount of such polar groups is 10⁻¹ to 10-⁸mol/g, and preferably 10⁻² to 10⁻⁶mol/g.

The binders employed in the nonmagnetic layer and the magnetic layer are employed at 5 to 50% by weight, with respect to the nonmagnetic powder and the magnetic material, and preferably at 10 to 30% by weight. In the case that a vinyl chloride resin is employed, it is employed at 5 to 30% by weight, in the case that a polyurethane resin is employed, it is employed at 2 to 20% by weight, and in the case that a poly isocyanate is employed, it is employed at 2 to 20% by weight. However, in the case that head corrosion occurs due to slight dechlorination, polyurethane only, or polyurethane and isocianate may be utilized. In the present invention, in the case that polyurethane is employed, it is preferable that the glass transition temperature is -50 to 150°C, and more preferably 0°C to 100°C. It is also preferable that the elongation after fracture is 100 to 2000%, that the fracture stress is 0.05 to 10kg/mm² (0.49 to 98MPa) , and that the yield point is 0.05 to 10Kg/mm² (0.49 to 98MPa).

As described above, the magnetic disk 4 comprises at least two layers. Accordingly, it is possible to vary the amount of the binder; the percentages of vinyl chloride resin, polyurethane resin, the poly isocyanate and other resins within the binder; the molecular weights of each resin that forms the magnetic layer; and the amount of polar groups; or the physical properties of the aforementioned resins in the nonmagnetic layer and the magnetic layer, as necessary. In fact, the above factors should be optimized for each layer. Known techniques related to multiple layer magnetic layers may be applied. For example, in the case that the amount of the binder is changed within each layer, it is effective to increase the amount of binder in the magnetic layer, to decrease abrasion of the surface of the magnetic layer. Similarly, flexibility may be imparted to the nonmagnetic layer by increasing the amount of binder therein, to improve a head touch with respect to a head.

Here, examples of the poly isocyanates are isocyanates, such as thrylene diisocyanate; 4,4'-diphenyl methane diisocyanate; hexamethylene diisocyanate; xylylene diisocianate; naphthalene-1, 5-diisocyanate; o-toluidine diisocyanate; isophorone diisocyanate; and triphenyl methane triisocyanate. Alternatively, products of these isocyanates and poly alcohols, and poly isocyanates, which are produced by condensing the isocyanates, may be utilized.

### [Manufacturing Method]

Next, the manufacturing method of the magnetic disk 4, employing the aforementioned materials, will be described. The steps in manufacturing the magnetic coating of the magnetic disk comprise at least a kneading step, a dispersing step, and mixing steps, which are performed prior to and following the above two steps, as necessary. Each of the steps may be divided into two or more stages. The magnetic material, the nonmagnetic powder, the binder, the carbon black, the abradant, the charge preventing agent, the lubricating agent, and the solvents, which are utilized in the present invention, may be added at either the beginning or during any step. In addition, each material may be added during two or more steps.

For example, polyurethane may be added in separate stages to adjust viscosity, during the kneading step and the dispersion step, and after dispersion. Conventionally known manufacturing methods may be employed during portions of the steps, to achieve the objective of the present invention. It is preferable that a kneader having strong kneading abilities, such as an open kneader, a continuous kneader, a pressurizing kneader, and an extruder, are utilized during the kneading step. In the case that a kneader is employed, the magnetic material or the nonmagnetic powder is kneaded with either all of the binder or a portion thereof (preferably, 30% or greater of the total amount of binder) at 15 to 500 parts per 100 parts of the magnetic material. In addition, glass beads may be employed to disperse the magnetic layer liquid and the nonmagnetic layer liquid. However, zirconium beads, titanium beads, and steel beads are preferred, as they are dispersion media having high specific gravities. The particle diameters and the filling rates of the dispersion media are optimized. A known dispersing machine may be utilized.

In the case that the nonmagnetic coating and the magnetic coating are coated to have a layered structure, it is preferable that the following methods are employed. As a first method, the base layer is coated with the magnetic coating by a commonly employed gravure coating apparatus, a roll coating apparatus, a blade coating apparatus, or an extrusion coating apparatus. While the base layer is still in a wet state, an upper layer is coated by a substrate pressurizing extrusion coating apparatus such as those disclosed in Japanese Patent Publication No. 1-46186, Japanese Unexamined Patent Publication Nos. 60(1985)-238179 and 2(1990)-26562. As a second method, upper and lower layers are coated substantially simultaneously, by employing a coating head having two coating liquid passage slits, as disclosed in Japanese Unexamined Patent Publication Nos. 63(1988)-88080, 2-17971, and 2-265672. As a third method, upper and lower layers are coated substantially simultaneously, by employing an extrusion coating apparatus with a backup roll, as disclosed in Japanese Unexamined Patent Publication No. 2-174965.

A sequential layer coating process, in which the base layer is coated and dried, then the magnetic layer is provided atop the base layer, may be employed to realize the structure of the present invention.

In magnetic disks, there are cases in which sufficiently isotropic directionality is obtained without employing an orientating apparatus. However, it is preferable that known random orientating methods, such as alternately arranging cobalt magnets in an inclined manner, or applying an alternating current magnetic field with a solenoid, are employed. In the case of hexagonal ferrite, there is a tendency for three dimensional However, it is also possible to obtain a two dimensional random orientation. In addition, it is also possible to obtain a circumferential orientation, by employing a spin coat method.

It is preferable that the drying position of the coated films is controlled, by controlling the temperature and the amount of forced drying air, as well as the coating speed. It is preferable that the coating speed is 20m/minute to 1000m/minute, and that the temperature of the forced drying air is 60°C. It is also possible to perform an appropriate amount of pre-drying, before entering a magnetic zone.

A heat resistant plastic roller, such as an epoxy, polyimide, polyamide, and polyimide amide roller, or a metal roller is employed as a calender processing roll. However, particularly the disk, it is preferable that the calender process is performed using metal rollers. The processing temperature is preferably 50°C or greater, and further preferably 100°C or greater. Linear pressure is preferably 200kg/cm (196kN/m) or greater, and further preferably 300kg/cm (294kN/m). In addition, if a surfacing process is performed using an abrasive tape made of alumina, chromium oxide, diamonds, or the like, protrusions and foreign matter are removed, which is preferable.

### [Layer Structure]

The thicknesses of the layer structure of the magnetic disk of the present invention are as follows. The thickness of the substrate is 2µm to 150µm, and preferably 20µm to 80µm. An undercoating layer may be provided between the substrate and the nonmagnetic base layer, or between the nonmagnetic layer and the magnetic layer, to improve the adhesive properties thereof. The thickness of the undercoating layer is 0.01µm to 0.5µm, and preferably 0.02µm to 0.5µm. Although a magnetic disk normally has a nonmagnetic base layer and a magnetic layer on each of the two sides of a substrate, the nonmagnetic layer and the magnetic layer may be provided only on one side.

The thickness of the magnetic layer is 200nm or less, and preferably 30nm to 150nm. The variance of the thickness is preferably ±20%, and further preferably ±5%. The magnetic layer may be separated into two or more layers having different magnetic properties, and structures of known layered magnetic layers may be applied.

The thickness of the nonmagnetic base layer is in a range from 0.2µm to 5.0µm, preferably in a range from 0.3µm to 3.0µm, and further preferably in a range from 1.0µm to 2.5µm. Note that the base layer exhibits its effects as long as it is substantially nonmagnetic. That is, even if magnetic material is included therein, either as impurities or intentionally, the effects of the present invention are exhibited, and it will be recognized as substantially the same structure as that of the present invention. In practical terms, the nonmagnetic base layer refers to a layer having a residual magnetic flux density of 50mT or less, or a magnetic resistance of 5000e (40kA/m) or less. Preferably, the nonmagnetic layer does not have residual magnetic flux density nor magnetic resistance. The magnetic disk, which has been produced in this manner preferably has protrusions having heights of 10nm or greater on the surface of the magnetic layer, at a density of 10 to 1000 protrusions per 900µm².

### [Liners]

Next, the liners 6, 6 will be described with reference to Figure 1. The liners 6, 6 are attached to the interior surfaces of the upper shell 2 and the lower shell 3, each of which faces the magnetic disk 4, by heat welding, adhesive or the like. The liners 6, 6 are of the same shape as each other (symmetrically). Portions that overlap with the windows 10, 11 are cut out. Circular apertures, each of which are larger than the outer diameter of either the annular protrusion 12 or the spindle aperture 3c, are formed at the central portions as well.

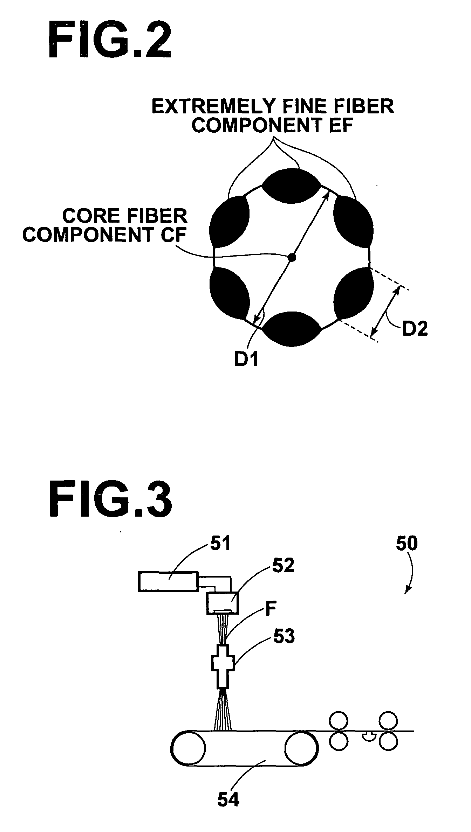

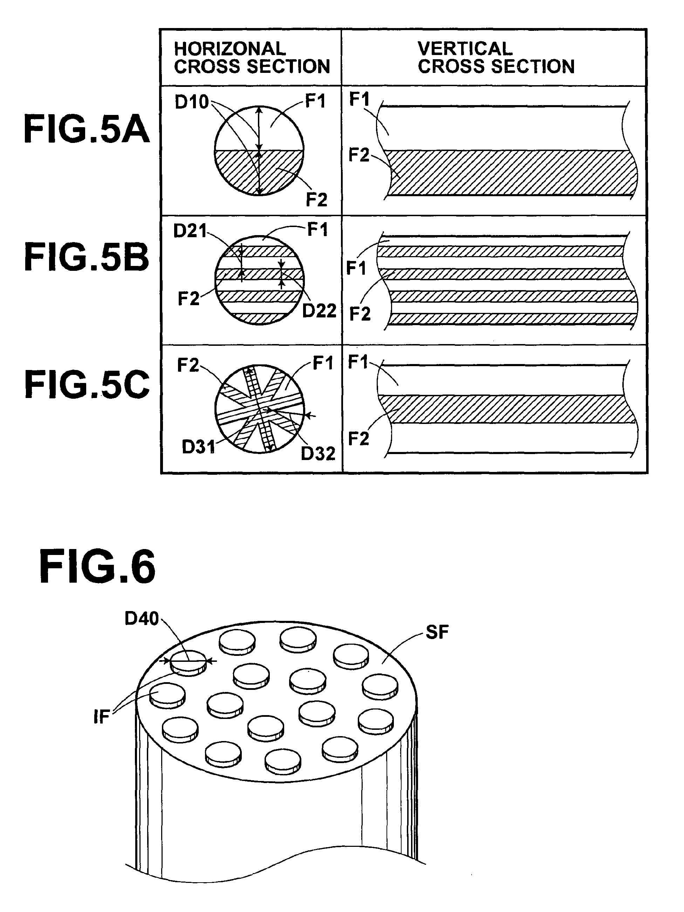

The liners 6, 6 comprise non-woven fabric that includes extremely fine fibers having fiber diameters within a range from 0.05µm to 10µm, and preferably within a range from 0.4µm to 8µm. The non-woven fabric may be formed by compound divided fibers, which are subjected to a fiber division process, as illustrated in Figure 2. Alternatively, the non-woven fabric may be formed by fibers, in which a sea portion of a sea-island compound fiber is removed, as illustrated in Figure 6. As a further alternative, the non-woven fabric may be formed by extremely fine fibers, which are spun by a direct fiber spinning method.

First, the compound divided fibers will be described, with reference to Figure 2. The compound divided fiber F is formed by a plurality of fiber components which are adhesively attached to each other. A plurality of extremely fine divided fiber components EF are arranged along the cross sectional outer periphery of a core fiber component CF. The average linear diameter D1 of the core fiber component CF is in a range from 5µm to 25µm (fineness=1.5 deniers), and preferably in a range from 6µm to 18µm. The average linear diameter D2 of the extremely fine divided fiber components EF is in a range from 0.05µm to 10µm (fineness=0.25 deniers), and preferably in a range from 0.4µm to 8µm. An example of such a compound divided fiber is Super Alcima 2, manufactured by UNITIKA Limited. Here, the core fiber component CF of the compound divided fiber F of Figure 2 is formed of a polyolefin resin such as polyethylene resin. The extremely fine divided fiber components EF is formed of a polyester resin.

Further, the compound divided fiber is to be subjected to a fiber division process, by a so-called water-jet fiber division method (refer to, for example, Japanese Patent Publication Nos. 57(1982)-59384, 60(1985)-66554, and 4(1992)-80135). Specifically, a high pressure water stream is caused to strike a stacked web, which comprises webs produced by the spunbond method, to perform the fiber division process on the compound divided fiber. Note that although the stream fiber division method is given as an example of the fiber division process for the compound divided fiber F, other methods are also applicable. Examples of these other methods are: applying heat according to the adhesive structures among the fiber components of the compound divided fiber F; and soaking in a solvent, to divide the compound divided fiber into each of its constituent fiber components.

Note that it is preferable that fibers, which are formed by the aforementioned direct fiber spinning method, include polyester fibers. By employing a comparatively hard material such as polyester, generation of dust particles due to wearing of the liners is suppressed, even in the case that the magnetic layer 4 of the magnetic disk 4 includes a predetermined amount of artificial diamonds.

It is preferable that each of the aforementioned non-woven fabrics are produced by the spunbond method (refer to page 349 of "Fiber Manual, Second Edition", Maruzen KK, published March 25th, 1994), which is a method for obtaining long fibered non-woven fabric. Figure 3 is a schematic drawing of an example of a fiber producing apparatus that employs the spunbond method. The fiber producing apparatus 50 of Figure 3 comprises an extruder 51, which is equipped with a spinneret 52; an ejector portion 53; and a conveyor 54. The spinneret 52 has a great number of fine holes, and contains material for the compound fiber in melted form. The ejector portion 53 generates a high speed air stream that draws the melted fiber, which is extruded through the spinneret 52. The conveyor 54 is the portion where webs are formed by the accumulated melted fiber, which has been drawn by the ejector portion 53. The conveyor 54 also serves to convey the webs formed thereon. The non-woven fabric is produced by stacking the webs, which are produced by the fiber producing apparatus 50.

Note that in the case that the compound divided fiber or the sea-island compound fiber is produced by the spunbond method, a known method, wherein each fiber component may be extruded toward the spinneret at a predetermined ratio, and caused to join to form a predetermined structure by the flow path of the spinneret, may be employed. Alternatively, another known method, wherein two fiber components are caused to merge from two directions at a T-shaped or Y-shaped flow path of the spinneret, may be employed.

In this manner, the non-woven fabric, which has been produced by the spunbond method, are formed from long fibers. Therefore, it becomes unlikely that very small fibers, which are a cause of dust, are included in the liners 6, 6. Therefore, the amount of dust generated by the liners 6, 6 themselves is reduced, thereby enabling improvement of a quality margin. Further, it is possible to produce non-wove fabric (web) having fiber lengths of up to 5000m by employing the spunbond method. Accordingly, the cost of the liners 6, 6 can be suppressed.

Further, the non-woven fabric, which is produced by the fiber producing apparatus 50 of Figure 3, is to be subjected to a fiber division process, by a so-called water-jet fiber division method as explained herein before.

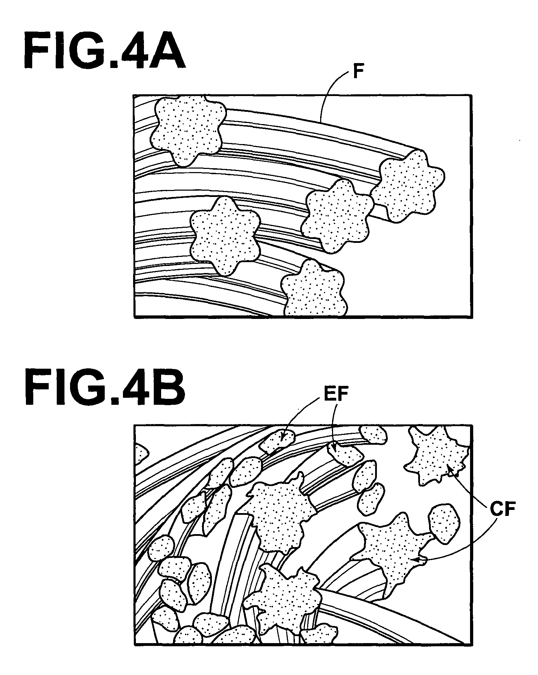

After the fiber division process, the compound divided fiber F, having a structure in which extremely fine divided fiber components EF are adhesively attached to the cross sectional outer periphery of a core fiber component CF as illustrated in Figure 4A, is divided. That is, the compound divided fiber F is divided into a divided core fiber CF, having a fiber diameter of 6µm to 20µm, and an extremely fine divided fiber EF, having a fiber diameter of 1µm to 10µm. Accordingly, the liners 6, 6 include extremely fine divided fibers EF, having fiber diameters of 1µm to 10µm. Therefore, the liners 6, 6 are capable of wiping off microscopic dust particles which are attached to the surface of the magnetic disk 4. Thereby, the occurrence of recording and reproduction errors can be reduced in the disk cartridge 1, which is designed to have a large recording capacity, high recording density, and narrow tracks.

That is, it is necessary to utilize thin fibers in the non-woven fabrics, which are employed as the liners 6, 6, in order for them to exhibit their microscopic dust removal performance. However, it is extremely difficult to produce extremely fine synthetic fibers of thicknesses of 10µm or less (fineness=1 denier or less) as single fibers. On the other hand, the present invention employs non-woven fabric comprising the aforementioned divided fibers, which are obtained by subjecting a compound divided fiber to a fiber division process, as the liners 6, 6. Thereby, the non-woven fabric can include extremely fine divided fibers having fiber diameters of 10µm or less. Accordingly, microscopic dust particles, which are attached to the surface of the magnetic disk 4, can be positively removed. Therefore, a liner 6 is provided, which is compatible with high capacity, high density magnetic disks.

Note that Figure 2 illustrates an example of a compound divided fiber, in which a plurality of extremely fine divided fiber components are arranged along the cross sectional outer periphery of a core fiber component. However, compound divided fibers having different structures may also be employed. Examples are illustrated in Figures 5A, 5B, and 5C. Figure 5A illustrates a compound divided fiber of a parallel two layer construction, in which two semicircular fiber components F1 and F2 (fiber diameter D10=1µm∼10µm) are joined to each other. Figure 5B illustrates a parallel multiple layer structure, in which two fiber components F1 and F2 (fiber diameters D21, D22=1µm∼10µm) are alternately stacked. Figure 5C illustrates a multiple layer radial structure, in which fiber components F1 (fiber diameter D32=1µm∼10µm) are radially arranged at the cross sectional periphery of a fiber component F2, which is at the central portion of the two cross sectional views.

In the embodiment described above, a case has been described in which non-woven fabric, including extremely fine fibers having fiber diameters of 1µm to 10µm and derived from compound divided fibers, are employed as the liners. However, non-woven fabric that includes extremely fine fibers having fiber diameters of 0.05µm to 10µm other than compound divided fibers may also be employed as the liners. As non-woven fabrics that include extremely fine fibers having fiber diameters of 0.05µm to 10µm, there are: those which are hand formed from the aforementioned compound divided fibers; those which are formed from sea-island compound fibers having a sea-island structure; and those which have been formed by extremely fine fibers spun by a direct fiber spinning method.

Specifically, in the case that the non-woven fabric is formed by the aforementioned compound divided fiber, a compound divided fiber, in which the fiber diameters of the extremely fine fibers EF are 0.05µm to 10µm, is employed (refer to Figure 2). The non-woven fabric is caused to include extremely fine fibers having fiber diameters of 0.05µm to 10µm, by this compound divided fiber being subjected to the stream fiber division process.

Figure 6 is a schematic diagram illustrating an example of a fiber having a sea-island structure. A case will be described, in which non-woven fabric is formed by a fiber having the sea-island structure. The fiber of Figure 6 comprises: a sea portion fiber component SF, which is formed of polyethylene or the like; and extremely fine island portion fiber components IF, which are formed of polyethylene terephthalate or the like. The fiber is of a structure wherein a plurality of the island portion fiber components IF are interspersed within the sea portion fiber component SF, when viewed in cross section. The fiber diameters D40 of the extremely fine island portion fiber components are 0.05µm to 10µm. The sea portion fiber component is dissolved, leaving only the extremely fine island portion fiber components, thereby forming the extremely fine fibers. Note that known techniques for producing the extremely fine fibers employing the sea-island structure, such as those disclosed in Japanese Patent Publication No. 61(1986)-13032 and Japanese Unexamined Patent Publication No. 4(1992)-174767, are employed.

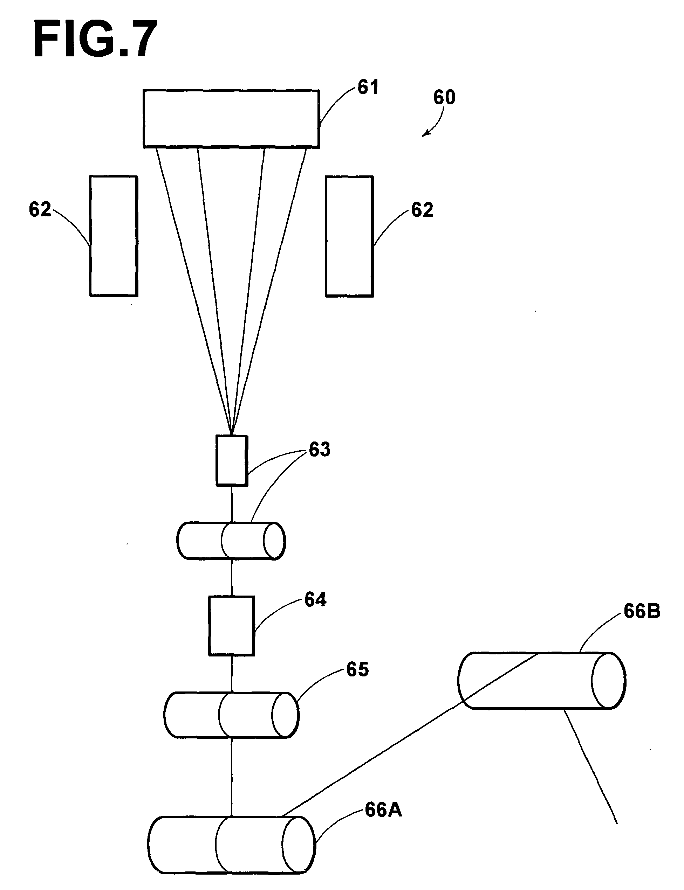

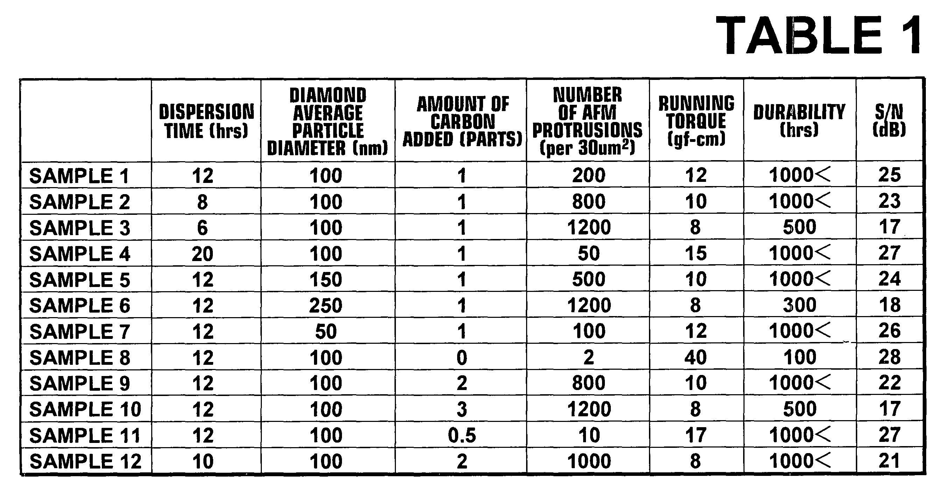

Further, as a non-woven fabric that includes extremely fine fibers having fiber diameters of 0.05µm to 10µm, that which is formed by extremely fine fibers, which have been produced by a known direct fiber spinning method as disclosed in Japanese Unexamined Patent Publication No. 11(1999)-22270, may be employed as liners. Figure 7 is a schematic diagram of a direct fiber spinning apparatus 60. The direct fiber spinning apparatus 60 comprises: a spinneret 61; a cooling portion 62; a first oil coating portion 63; an entangling portion 64; a second oil coating portion 65; and rollers 66A and 66B. The spinneret 61 has a great number of fine holes, and contains material for the fiber in melted form. The cooling portion 62 causes cold air to strike the filaments, which are extruded from the spinneret 61. The first oil coating portion 63 converges the filaments, which are cooled by the cooling portion 62, and applies oil thereon, either by spraying or by coating with a roller. The entangling portion 64 entangles the filaments, which are coated with oil by the first oil coating portion 63. The second oil coating portion 65 applies oil to the entangled filaments, either by spraying or by coating with a roller. The rollers 66A and 66B heat and stretch the filaments, which are coated with oil by the second oil coating portion 63. The filaments, which are extruded from the spinneret 61, undergo the cooling step, the first oil coating step, the entangling step, the second oil coating step, and the heating and stretching step, to generate extremely fine fibers having fiber diameters of 0.05µm to 10µm. Then, non-woven fabric that employs the generated extremely fine fibers is utilized as liners.

Non-woven fabric that includes extremely fine fibers having fiber diameters of 0.05µm to 10µm, which are formed by the aforementioned compound divided fiber, the sea-island compound fiber, or the direct fiber spinning method, are employed as the liners. Therefore, it becomes possible to employ non-woven fabric that includes fiber components, which are sufficiently finer than fiber components having fiber diameters within a range from 10µm to 30µm, of conventional non-woven fabrics, as the liners. Accordingly, even microscopic dust particles, which are attached to an information recording medium, can be removed. Thereby, the occurrence of recording and reproduction errors can be reduced in a disk cartridge, which is designed to have a large recording capacity, high recording density, and narrow tracks.

### [Relationship between the Liners and the Magnetic Disk]

Here, non-woven fabric, formed by fibers having average linear diameters of 0.1µm to 10µm, is employed as the liners 6, 6. Thereby, the dust removing properties are improved, as described above. It has been found that even in this case, as long as the amount of added artificial diamonds is 0.5% to 10% by weight, and the average particle diameter thereof is 30nm to 250nm, the generation of dust from the magnetic disk 4 and the liners 6, 6 can be suppressed.

### [Examples]

Hereinafter, the present invention will be described in further detail by the use of examples. However, the present invention is not to be limited by the following examples. Note that hereunder, "part" refers to "part by weight".

Sample 1: Each component of a magnetic coating A and a nonmagnetic coating was kneaded by a kneader. Then, the magnetic coating A was dispersed for 12 hours by employing a sand mill at 2000RPM. The nonmagnetic coating was dispersed for three hours by employing a sand mill at 2000RPM. Poly isocyanate was added to the obtained dispersed liquid of the magnetic coating A at 3 parts. Poly isocyanate was added to the obtained dispersed liquid of the nonmagnetic coating at 6 parts. Further, 30 parts of cyclohexanone was added to both coatings. The coating liquids for forming the magnetic layer and for forming the nonmagnetic layer were adjusted by filtering through a filter having an average aperture diameter of 1µm.

The nonmagnetic layer coating fluid was coated on a polyethylene naphthalate substrate, having a thickness of 53µm and an average central plane surface roughness of 3nm, so that the dry thickness of the coating would be 1.5µm. After drying the substrate, the magnetic coating was applied thereto, so that the thickness thereof is 0.1µm. After the substrate is dried again, it is processed in a seven step calender at a temperature of 90°C and a linear pressure of 300kg/cm. Then, the substrate is punched out to a 3.5inch size, then heated for 24 hours in a constant temperature tank at 55°C. The magnetic disk 4, which was obtained in this manner, was housed in a case C having liners 6, 6 fixed thereto, to form a disk cartridge 1 as illustrated in Figure 1.

Samples 2∼4: Samples 2 through 4 were produced by the same method as that of Sample 1, except that the amounts of time spent dispersing the magnetic coating A in the sand mill were changed from 12 hours to those indicated in Table 1.

Samples 5∼7: Samples 5 through 7 were produced by the same method as that of Sample 1, except that the average particle diameters of the diamond particles of the magnetic coating A were changed to those indicated in Table 1.

Samples 8∼10: Samples 8 through 10 were produced by the same method as that of Sample 1, except that the amounts of carbon black #50, which was added to the magnetic coating A, were changed to those indicated in Table 1.

| <Magnetic Coating A> | |
|---|---|
| Hexagonal Barium Ferrite | 100 parts |
| Surfacing Process: Al₂O₃ 5% by weight, SiO₂ 2% by weight | |
| Hc: 25000e | |
| Plate Diameter: 30nm | |
| Plate Ratio: 3 | |
| δs: 5emu/g | |

| Vinyl Chloride Copolymer | |
|---|---|
| MR110 (manufactured by Nippon Zeon Co., Ltd.) | 6 parts |

| Polyurethane Resin | |
|---|---|
| UR8300 (manufactured by Toyobo Co., Ltd.) | 3 parts |
| Diamond (average particle diameter: 100nm) | 2 parts |

| Carbon Black | |
|---|---|
| #50 (manufactured by Asahi Carbon Co., Ltd.) | 1 part |

| Isocetyl Stearate | |
|---|---|
| 5 parts | |
| Stearic Acid | 1 part |
| Oleic Acid | 1 part |
| Methyl Ethyl Ketone | 80 parts |
| Cyclohexanone | 120 parts |

| <Nonmagnetic Coating> | |
|---|---|
| α-Fe₂O₃ Hematite | 100 parts |
| longitudinal axis length: 0.07µm | |
| transverse axis length: 0.014µm | |
| Specific Surface Area measured by the BET method 55m²/g | |
| pH: 9 | |
| Surface processing agent: Al₂O₃ 8% by weight | |
| Carbon Black (average particle diameter: 20nm) | |
| CONDUCTEX SC-U (manufactured by Columbia Carbon Co., Ltd.) | 25 parts |

| Vinyl Chloride Copolymer | |
|---|---|
| MR104 (manufactured by Japan Zeon Co., Ltd) | 15 parts |

| Polyurethane Resin | |
|---|---|
| UR8300 (manufactured by Toyobo Co., Ltd.) | 7 parts |
| Phenyl Phosphonate | 4 parts |

| Isocetyl Stearate | |
|---|---|
| 6 parts | |
| Oleic Acid | 1.3 parts |
| Stearic Acid | 1.3 parts |
| Methyl Ethyl Ketone/Cyclohexanone (8/2 mixture) | 250 parts |

### <Evaluation Method>

### (1) Measurement of Running Torque

The disk cartridges 1 were rotated without a head at 3600RPM by a Spin Stand LS-90 by Kyoudou Electron Systems. Running torque was calculated from the electric current applied to the motor during rotation.

### (2) Measurement of Durability

The disk cartridges 1 were placed in a RWA1001 disk evaluating apparatus by GUZIK and a Spin Stand LS-90 by Kyoudou Electron Systems. A compound type MR head having a writing track width of 1.5µm and a readout track width of 0.9µm was employed to continuously seek positions from 44mm to 88mm in the radial direction, while rotating the magnetic disks 4 at 3600RPM. Every 10 hours from the initiation of continuous seeking, dropouts were measured in the seeked portions. When dropouts, which were 100µm or longer, and at which output decreased 30% or greater, were confirmed, that was determined to be the lifetime of the magnetic disk 4.

### (3) Measurement of S/N Ratio

The disk cartridges 1 were placed in a RWA1001 disk evaluating apparatus by GUZIK and a Spin Stand LS-90 by Kyoudou Electron Systems. A compound type MR head having a writing track width of 1.5µm and a readout track width of 0.9µm was employed to write signals having a linear recording density of 140KFCI, while rotating the magnetic disks 4 at 3600RPM. The reproduction output (TAA) and the noise levels following DC degaussing were measured, and designated as the S/N ratio.

### (4) Number of AFM Protrusions

An atomic force microscope (AFM) was employed to count the number of protrusions having heights of 10nm or greater, within areas 30µm square.

The obtained results are indicated in Table 1.

With regard to Table 1, disk cartridges 1 that exhibited rotating torques of 20gf-cm or less, durability of 1000 hours or greater, and S/N ratios of 20dB or greater, are designated as those having good durability an high S/N ratios. It was found that the running durability deteriorated in the case that the number of AFM protrusions was 1200, as in Samples 3, 6, and 10. This is considered to be caused by faulty recording/reproduction by the MR heads that access the surface of the magnetic disks 4, due to the great number of AFM protrusions.

On the other hand, in the case that the number of AFM protrusions was 2, as in Sample 8, the running torque increased to 40gf-cm, which also deteriorated the running durability. This is considered to be caused by increased friction among the magnetic disk 4 and the liners, due to the small number of AFM protrusions.

It was found that disk cartridges 1, which had 10 to 1000 AFM protrusions, and 50 to 800 AFM protrusions, as in Samples 1, 2, 4, 5, 7, 9, 11, and 12, exhibited good running durability and high S/N ratios. That is, it was found that when the aforementioned liners, which are capable of removing microscopic dust particles, are employed, the number of AFM protrusions should be in a range from 10 to 1000, in order to prevent deterioration in the running durability and the S/N ratio.

The present invention is not limited to the embodiments described above. For example, the present invention is applied to a so called 3.5 inch type floppy disk cartridge, as illustrated in Figure 1. However, the present invention is not limited to that type of disk cartridge 1. For example, the present invention may be applied to a "clik!™" or a "Pocket Zip™" disk cartridge manufactured by Iomega Corp.. These miniature disk cartridges comprise a housing and a flexible information recording medium, such as a magnetic disk having a diameter of 46.5mm secured to a center core, which is rotatably contained within the housing. The housing comprises upper and lower shells formed by flat thin metal plates which are 50mm wide, 66mm long, and 1.95mm thick. In this case, the rotational speed of the disk (information recording medium 4) is selected from within a range of 2000rpm to 8000rpm. The present invention exhibits superior performance, even for disks that rotate at high speeds such as these. Further, the information recording medium 4 is not limited to being a magnetic disk, and may be a flexible optical disk or the like.

According to the embodiments of the present invention, the liners 6, 6 comprise non-woven fabric that includes extremely fine fibers having fiber diameters within a range from 0.05µm to 10µm. Therefore, it becomes possible to employ non-woven fabric that includes fiber components (for example, having fiber diameters within a range from 1µm to 10µm), which are sufficiently finer than fiber components having fiber diameters within a range from 10µm to 30µm, of conventional non-woven fabrics, as the liners. Therefore, microscopic dust particles which have become attached to the information recording medium are enabled to be removed by the liners. Reduction of recording/reproduction errors and suppression of dropouts are realized in disk cartridges having large recording capacity, high recording density, and narrow tracks. Thereby, a durable and reliable disk cartridge is provided.

The non-woven fabric may be produced by the spunbond method. In this case, the fiber lengths of the divided fibers that constitute the non-woven fabric can be increased. Therefore, the amount of dust generated by the liners themselves is reduced, thereby further reducing the generation of recording/reproduction errors of the disk cartridge.

Further, the non-woven fabric may include fiber components made of polyester. In this case, the liners 6, 6 are formed by a comparatively hard material. Therefore, wearing of the liners 6, 6 by the information recording medium is suppressed, further reducing the generation of dust particles.

A solidifying process may be administered on the edges of the liners 6, 6. In this case, the generation of dust at the edges of the liners 6, 6, which are the cut ends of the fiber components, is reduced. Thereby, the amount of dust generated by the liners 6, 6 themselves is further reduced.

Further, the information recording medium 4 may be a magnetic disk 4 that includes artificial diamonds having average particle diameters within a range from 30nm to 250nm in a magnetic layer of the magnetic disk within a range from 0.5% to 10% by weight with respect to the magnetic material therein. In this case, wearing of the magnetic layer by the liners 6, 6 as well as wearing of the liners 6, 6 by the diamond particles is reduced. Thereby, the durability and the reliability of the magnetic disk are improved, while the occurrence of dropouts, caused by dust particles generated from the liners or the magnetic disk, is suppressed.

The information recording medium 4 may be a magnetic disk comprising:
a substrate;
a substantially nonmagnetic base layer, provided on the substrate; and
a magnetic layer formed by ferromagnetic powder dispersed within a binder, stacked on the base layer; wherein:
   the information recording medium has a surface recording density of approximately 158.7Mbit/cm²; and
   protrusions having heights of 10nm or greater are provided on the magnetic layer, at a density of 10 to 1000 protrusions per 900µm². In this case, microscopic dust particles are enabled to be removed by the liners 6, 6. At the same time, increase in rotational torque is suppressed, even if the liners 6, 6 are utilized. Thereby, the running durability and the S/N ratio are prevented from deteriorating.

## Claims

1. A disk cartridge comprising:
a flat case;
a discoid information recording medium, which is rotatably housed by the case; and
liners, which are attached to surfaces of the case that face the information recording medium, for removing contaminants from the information recording medium; wherein:
the liners comprise non-woven fabric that includes extremely fine fibers having fiber diameters within a range from 0.05µm to 10µm.

2. A disk cartridge as defined in claim 1, wherein:
the liners comprise non-woven fabric formed by compound divided fibers, which are obtained by adhesively attaching a plurality of fiber components to each other at their side surfaces, and are subjected to a fiber division process.

3. A disk cartridge as defined in claim 2, wherein:
the compound divided fibers are of a structure in which a plurality of fiber components, having fiber diameters within a range from 1µm to 10µm, are provided along the cross sectional outer periphery of a fiber component having a fiber diameter within a range from 6µm to 20µm.

4. A disk cartridge as defined in claim 1, wherein:
the liners comprise non-woven fabric, in which a sea portion of a sea-island compound fiber comprising a plurality of extremely fine fibers, as island portions interspersed within the sea portion fibers, is removed.

5. A disk cartridge as defined in any one of claim 1 through claim 4, wherein:
the liners comprise non-woven fabric, formed by extremely fine fibers, which are spun by a direct fiber spinning method.

6. A disk cartridge as defined in any one of claim 1 through claim 5, wherein:
the non-woven fabric is produced by a spunbond method.

7. A disk cartridge as defined in any one of claim 1 through claim 6, wherein:
a solidifying process is administered on the edges of the liners.

8. A disk cartridge as defined in claim 1, wherein:
the information recording medium is a flexible magnetic disk having a surface recording density of approximately 158.7Mbit/cm²; and
artificial diamonds having average particle diameters within a range from 30nm to 250nm are included in a magnetic layer of the magnetic disk within a range from 0.5% to 10% by weight with respect to the magnetic material therein.

9. A disk cartridge as defined in claim 1, wherein:
the information recording medium is a magnetic disk comprising:
a substrate;
a substantially nonmagnetic base layer, provided on the substrate; and
a magnetic layer formed by hexagonal ferrite powder dispersed within a binder, stacked on the base layer.

10. A disk cartridge as defined in claim 1, wherein:
the information recording medium is a magnetic disk comprising:
a substrate;
a substantially nonmagnetic base layer, provided on the substrate; and
a magnetic layer formed by ferromagnetic powder dispersed within a binder, stacked on the base layer; wherein:
the information recording medium has a surface recording density of approximately 158.7Mbit/cm²; and
protrusions having heights of 10nm or greater are provided on the magnetic layer, at a density of 10 to 1000 protrusions per 900µm².
